# EUROPEAN PATENT SPECIFICATION

(11) **EP 3 043 364 B1**
(45) Date of publication and mention of the grant of the patent: **11.07.2018**
(21) Application number: 16157087.4
(22) Date of filing: 24.02.2016
(51) Int. Cl.: H01F 41/00, H01F 41/02, H01F 1/057, B22F 3/12, B22F 3/24, B22F 3/26, C21D 6/00

(54) **PREPARATION OF PERMANENT MAGNET MATERIAL**
HERSTELLUNG EINES DAUERMAGNETMATERIALS
PRÉPARATION DE MATÉRIAU D'UN AIMANT PERMANENT

(30) Priority: 28.08.2015 CN 201510545815
(43) Date of publication of application: 13.07.2016
(73) Proprietor: Tianhe (Baotou) Advanced Tech Magnet Co., Ltd., Baotou Inner Mongolia 014030 (CN)
(72) Inventor: Yi, Haibo, 014030 Baotou (CN); Dong, Yi, 014030 Baotou (CN); Diao, Shulin, 014030 Baotou (CN); Yuan, Yi, 014030 Baotou (CN); Wu, Shujie, 014030 Baotou (CN); Sun, Cailing, 014030 Baotou (CN); Miao, Juchang, 014030 Baotou (CN); Chen, Ya, 014030 Baotou (CN); Yuan, Wenjie, 014030 Baotou (CN)
(74) Representative: Engelhard, Markus

(56) References cited:
- EP-A1- 1 879 201
- EP-A1- 1 923 893
- EP-A1- 2 808 877
- WO-A1-2006/109615
- CN-A- 104 599 829
- US-A- 4 063 971
- US-A1- 2010 012 035
- US-A1- 2010 051 140

## Description

### TECHNICAL FIELD OF THE INVENTION

The present invention relates to a method for preparing a permanent magnet material, especially to a method for preparing a neodymium-iron-boron permanent magnet material with lower production cost, significantly increasing coercive force, but decreasing the remanence very little.

### BACKGROUND OF THE INVENTION

With growing emphasis on reducing energy consumption worldwide, energy conservation and emission reduction have become the focus of attention of various countries. Compared to a non-permanent magnet motor, a permanent magnet motor can improve energy efficiency ratio. In order to reduce the energy consumption, neodymium-iron-boron (Nd-Fe-B) permanent magnet material has been used to produce the motors in the fields of air condition compressors, electric vehicle, hybrid vehicle or the like. Due to a high operating temperature of these motors, a higher intrinsic coercive force is required in all of these magnets. In addition, to increase magnetic flux density of the motors, the magnets were also required to have a higher magnetic energy product.

With conventional manufacture process of a neodymium-iron-boron magnet, it is difficult to satisfy both requirements of a high magnetic energy product and a high intrinsic coercive force. Even if such requirements are achieved, a large amount of rare earth elements Dy and Tb are still needed. However, the reserves of dysprosium (Dy) and terbium (Tb) around the world are finite, thus extensive use of Dy and Tb may cause prices to rise and accelerated depletion of the rare earth resources.

To improve the performance of the permanent magnet material and reduce the use of rare earth, a lot of researches have been done in the art. For instance, CN101404195A disclosed a method for preparing a rare earth permanent magnet by providing a sintered magnet body consisting of 12-17 at % of rare earth, 3-15 at % of B, 0.01-11 at % of metal element, 0.1-4 at % of O, 0.05-3 at % of C, 0.01-1 at % of N, and the balance of Fe, disposing on the surface of the magnet body a powder comprising an oxide, fluoride and/or oxyfluoride of another rare earth, and heat treating the powder-covered magnet body at a temperature below the sintering temperature in vacuum or in an inert gas, so that the other rare earth is absorbed in the magnet body. The characteristic of this method is to accomplish infiltration by disposing an oxide, fluoride and/or oxyfluoride of heavy rare earth, while the disadvantage thereof is to introduce harmful substance such as O and F. into the magnet Above all, after infiltration is completed, substances similar to oxide-scales on the surface of the magnet may arise, which need to be grinded, thus making the magnet materials being wasted.

As another example, CN101506919A disclosed a process for producing a permanent magnet, in which without deteriorating of the surface of the Nd-Fe-B sintered magnet, Dy is efficiently diffused in the crystal grain boundary phase to thereby attain effective enhancements of magnetization intensity and coercive force, and in which post-processes can be avoided. First of all, in a treatment chamber, the Nd-Fe-B sintered magnet and Dy are disposed with an interspace therebetween. Subsequently, in a reduced pressure, the treatment chamber is heated so that not only is the temperature of the sintered magnet raised to a given temperature but also Dy is evaporated to thereby attain supply of evaporated Dy atoms to the surface of the sintered magnet and adhesion therebetween. In this stage, the rate of Dy atoms supplied to the sintered magnet is controlled so that prior to the formation of any Dy layer on the surface of the sintered magnet, Dy is diffused in the crystal grain boundary phase of the sintered magnet. The characteristic of this method is to heat a substance containing heavy rare earth to form a vapor, while the disadvantage thereof is the expensive equipment cost and low evaporation efficiency. The actual comparative result shows that the effect of improving intrinsic coercive force (Hcj) of the latter method is inferior to the former one.

CN101615459A disclosed a method for improving magnetic performance of the sintered neodymium-iron-boron permanent magnet by a strip casting process with grain boundary diffusion of a heavy rare earth compound, wherein the infiltration treatment is prior to sintering. But the disadvantage of the method is that the heavy rare earth which has been enriched between boundary phases may disperse into the interior of the main phase during the high temperature sintering process after the magnet is infiltrated, thereby leading to equalization of heavy rare earth with a poor effect. EP 1 879 201 A1 discloses a method for diffusing heavy rare-earth into sintered magnets, using evacuated containers.

### SUMMARY OF THE INVENTION

An objective of this invention is to provide a method for preparing a permanent magnet material. The method enables to improve the infiltration homogeneity and infiltration efficiency of the rare earth element significantly. A further objective of this invention is to provide a method for preparing a permanent magnet material, which may dramatically improve coercive force of the permanent magnet material, but decrease the remanence very little.

This invention provides a method for preparing a permanent magnet material as specified in claim 1, comprising i.a. steps as follows:
S2) coating step: coating a rare earth element-containing substance on the surface of a magnet, wherein, the magnet has a thickness of 10mm or less at least in one direction; and
S3) infiltrating step, comprising steps as follows:
   S3-1) placing the magnet obtained from the coating step S2) into a container which has a passageway capable of carrying out a vacuuming operation;
   S3-2) vacuuming by the passageway, until the container having an atmospheric pressure of below 10Pa;
   S3-3) closing the passageway in the continued vacuuming operation;
   S3-4) heat treating the magnet closed in the container.

In accordance to the preparation method of the present invention, in the coating step S2), the rare earth element-containing substance is selected from compounds containing a rare earth element.

In accordance to the preparation method of the present invention, in the coating step S2), the rare earth element is at least one selected from praseodymium, neodymium, yttrium, gadolinium, terbium, dysprosium, holmium, erbium, thulium, ytterbium and lutetium.

In accordance to the preparation method of the present invention, in the coating step S2), the magnet has a thickness of 5mm or less at least in one direction.

In accordance to the preparation method of the present invention, in the infiltrating step S3), the container and the passageway are both made of quartz materials, and an inner diameter of the passageway is 5-12mm.

In accordance to the preparation method of the present invention, in the step S3-1), at least two magnets obtained from the coating step S2) are neatly arranged with a surface having the largest area in each magnet as a contact surface, closely contacted with each other under the action of pressure, and then put into the container.

In accordance to the preparation method of the present invention, in the step S3-1), the pressure is 50-1000 MPa.

In accordance to the preparation method of the present invention, preferably, in the step S3-2), carrying out the vacuuming operation by the passageway, until the container having an atmospheric pressure below 5 Pa. In the step S3-4), the heat treatment temperature is 600-1200°C; the heat treatment time is 0.5-10 hours.

In accordance to the preparation method of the present invention, the said method further comprising:
S1) preferably a magnet manufacturing step: manufacturing a magnet; and
S4) compulsorily an aging treatment step: performing an aging treatment on the magnet.

In accordance to the preparation method of the present invention, preferably, the magnet manufacturing step S1) comprising steps as follows:
S1-1) smelting step: smelting the neodymium-iron-boron raw material so that the smelted neodymium-iron-boron raw material forms a master alloy, wherein the master alloy has a thickness of 0.01-5 mm;
S1-2) powdering step: crushing the master alloy from the smelting step S1-1) into magnetic powder, wherein the magnetic powder has an average particle size D50 of 20 µm or less;
S1-3) shaping step: pressing the magnetic powder from the powdering step S1-2) into a green body for sintering under the action of an alignment magnetic field, wherein the green body has a density of 3.0 g/cm³-5 g/cm³; and
S1-4) sintering step: sintering the green body from the shaping step S1-3) into a magnet, wherein the sintering temperature is 900-1300°C, wherein the sintering time is 0.5-10 hours, and the density of the magnet is 6.0g/cm³-9.0g/cm³.

The present invention manufactures a neodymium-iron-boron permanent magnet material through the following steps: coating a rare earth element-containing substance on the surface of a magnet with specific thickness, after using specific vacuum treatment, manufacturing the neodymium-iron-boron permanent magnet material via heat treatment and aging treatment. Using the manufacture method of the present invention enables the rare earth element to infiltrate homogeneously with high infiltration efficiency. In accordance to the preferred technical solution of the present invention, the preparation method of the present invention is capable of achieving the homogeneous infiltration of the rare earth element into the magnet, thereby dramatically improving the coercive force of a permanent magnet material, but decreasing the remanence very little. In accordance to a further preferred technical solution of the present invention, no aging treatment is performed in the magnet manufacturing step, so that production costs are saved.

### DETAILED DESCRIPTION OF THE EMBODIMENTS

The present invention will be further explained in combination with the following specific embodiments, but the protection scope of the invention is not limited thereto.

The "remanence" in this invention refers to the value of the magnetic flux density at the point on the saturant magnetic hysteresis loop where the magnetic field strength is zero, and is commonly referred to as Bᵣ or Mᵣ, with the unit of Tesla (T) or Gauss (Gs).

The "intrinsic coercive force" in this invention refers to the magnetic field strength when the magnetic field is monotonically decreased to zero from the saturant magnetization state of the magnet and reversely increased to make its magnetization strength decrease to zero along the saturant magnetic hysteresis loop, and is commonly referred to as H_{cj} or _{M}H_{c}, with the unit of Oersted (Oe).

The "magnetic energy product" in this invention refers to the product of the magnetic flux density (B) of any point on the demagnetization curve and the corresponding magnetic field strength (H), and is commonly referred to as BH. The maximum value of BH is referred to as "maximum magnetic energy product" which is commonly referred to as (BH)ₘₐₓ, with the unit of Gauss• Oersted (GOe).

The "rare earth element" in this invention comprises but not limits to, praseodymium, neodymium, or "heavy rare earth element" ; preferably, is "heavy rare earth element". The "heavy rare earth element" in this invention is also referred to as "Yttrium element", comprising nine elements of Yttrium (Y), Gadolinium (Gd), Terbium (Tb), Dysprosium (Dy), Holmium (Ho), Erbium (Er), Thulium (Tm), Ytterbium (Yb), Lutetium (Lu) and so on.

The "inert atmosphere" in this invention is referred to the atmosphere which does not react with neodymium-iron-boron magnet and not affect its magnetism. In the present invention, the "inert atmosphere" comprises the atmosphere comprising nitrogen or inert gases (helium, neon, argon, krypton, xenon).

The "vacuum" in this invention means absolute vacuum degree, a smaller value of absolute vacuum degree represents a higher vacuum degree.

The "average particle size D50" in this invention represents the equivalent diameter of the largest particles when the cumulative distribution in the particle size distribution curve is 50%.

The preparation method of permanent magnet material in the present invention comprises a coating step S2) and a infiltrating step S3). Preferably, the preparation method of the present invention also comprises a magnet manufacturing step S1) and an aging treatment step S4). Moreover, the magnet manufacturing step S1) is carried out prior to the coating step S2), and the aging treatment step S4) is carried out after the infiltrating step S3).

In the present invention, the magnet may be a sintered neodymium-iron-boron magnet or the other magnets, preferably be a sintered neodymium-iron-boron magnet. The following is set forth in terms of the sintered neodymium-iron-boron magnet.

### <Magnet manufacturing step S1) >

Magnet manufacturing step S1) of the present invention is used to manufacture a sintered neodymium-iron-boron magnet. In the present invention, the magnet manufacturing step S1) preferably comprises steps as follows:
S1-1) smelting step: smelting the neodymium-iron-boron raw material so that the smelted neodymium-iron-boron raw material forms a master alloy;
S1-2) powdering step: crushing the master alloy from the smelting step S1-1) into magnetic powder;
S1-3) shaping step: pressing the magnetic powder from the powdering step S1-2) into a green body for sintering under the action of alignment magnetic field; and
S1-4) sintering step: sintering the green body from the shaping step S1-3) into a sintered neodymium-iron-boron magnet.

In accordance to the preferred embodiments of the present invention, magnet manufacturing step S1) may also comprise the following steps:
S1-5) tempering step: tempering the sintered neodymium-iron-boron magnet; and/or
S1-6) cutting step: cutting the sintered neodymium-iron-boron magnet.

### Smelting step S1-1)

In order to prevent the oxidation of the neodymium-iron-boron magnet raw material and the master alloy prepared therefrom, the smelting step S1-1) of the present invention is preferably carried out in vacuum or inert atmosphere. In the smelting step S1-1), there is no particular limit on the neodymium-iron-boron magnet raw material and the ratio thereof. The raw material and the ratio thereof that is known in the art can be used. In the smelting step S1-1), the smelting process preferably utilizes an ingot casting process or a strip casting process. The ingot casting process is that cooling and solidifying the smelted neodymium-iron-boron magnet raw material and producing an alloy ingot (master alloy). The strip casting process is that rapidly cooling and solidifying the smelted neodymium-iron-boron magnet raw material and spinning into alloy sheet (master alloy). In accordance to one preferred embodiment of the present invention, the smelting process utilizes the strip casting process. The inventors of the present application have surprisingly found that, it is possible for the strip casting process to avoid α-Fe which affects the uniformity of magnetic powder, and to avoid clumpy neodymium-rich phase, thereby beneficial to refining the grain size a main phase Nd₂Fe₁₄B of the master alloy, in contrast to the casting process. The strip casting process of the present invention is preferably carried out in a vacuum melting and rapid-hardening furnace. The thickness of the alloy sheet (master alloy) of the present invention may be 0.01-5mm, preferably 0.05-1mm, more preferably 0.1-0.5mm; the oxygen content is 2000ppm or less, preferably 1500ppm or less, and more preferably 1200ppm or less.

### Powdering step S1-2)

In order to prevent the oxidation of the master alloy and the magnetic powder crushed therefrom, the powdering step S1-2) of the present invention is preferably carried out in vacuum or inert atmosphere. The powdering process S1-2) of the present invention preferably comprises the following steps:
S1-2-1) coarsely crushing step: crushing the master alloy into coarse magnetic powder with a larger particle size; and
S1-2-2) milling step: milling the coarse magnetic powder obtained from coarsely crushing step S1-2-1) into fine magnetic powder (powder).

In the present invention, the average particle size D50 of the coarse magnetic powder obtained from the coarsely crushing step S1-2-1) is 500µm or less, preferably 350µm or less, more preferably 300-100µm. In the present invention, the average particle size D50 of the fine magnetic powder obtained from the milling step S1-2-2) is 20µm or less, preferably 10µm or less, more preferably 1-5µm.

In the coarsely crushing step S1-2-1) of the present invention, a mechanical crushing process and/or a hydrogen decrepitation process is applied to crush the master alloy into coarse magnetic powder. The mechanical crushing process is a process to crush the master alloy into coarse magnetic powder using a mechanical crushing device; the mechanical crushing device may be selected from jaw crusher or hammer crusher. The hydrogen decrepitation process includes the following steps: firstly making master alloy absorb hydrogen; initializing the master alloy crystal lattice expand through the reaction of master alloy and hydrogen and resulting in that the master alloy is crushed into coarse magnetic powder; then heating the coarse magnetic powder to carry out hydrogen desorption. In accordance to one preferred embodiment of the present invention, the hydrogen decrepitation process of the present invention is preferably carried out in a hydrogen decrepitation furnace. In the hydrogen decrepitation process of the present invention, the hydrogen absorption temperature is 50°C-400°C, preferably 100°C-300°C, and the hydrogen absorption pressure is 50-600kPa, preferably 100 ∼ 500kPa, and the hydrogen desorption temperature is 500-1000°C , preferably 700-900°C.

In the milling step S1-2-2) of the present invention, a ball milling process and/or a jet milling process is applied to crush the coarse magnetic powder into fine magnetic powder. The ball milling process is a process to crush the coarse magnetic powder into fine magnetic powder using a mechanical ball milling device. The mechanical ball milling device may be selected from a rolling ball milling, a vibration ball milling or a high energy ball milling. The jet milling process is a process to exploit gas flow to make the coarse magnetic powder accelerated and hit each other and then crushed. The gas flow may be nitrogen flow, preferably high purity nitrogen flow. The high purity nitrogen flow may have N₂ content of 99.0wt% or more, preferably 99.9wt% or more. The pressure of the gas flow may be 0.1-2.0MPa, preferably 0.5-1.0MPa, more preferably 0.6-0.7MPa.

In accordance to one preferred embodiment of the present invention, firstly, crushing the master alloy into coarse magnetic powder by the hydrogen decrepitation process; and then, crushing the coarse magnetic powder into fine magnetic powder by jet milling process.

In accordance to a further embodiment of the present invention, the powdering step S1-2) may manufacture the magnetic powder by utilizing a rapid quenching process (Magnequench). The rapid quenching process such as those known in the art may be used, and will not be further explained here.

### Shaping step S1-3)

In order to prevent oxidation of magnetic powder, the shaping step S1-3) of the present invention is preferably carried out in vacuum or inert atmosphere. In the present invention, a magnetic powder pressing process is preferably a mould pressing process and/or an isostatic pressing process. The mould pressing process and isostatic pressing process such as those known in the art may be used, and will not be further explained here. In the shaping step S1-3) of the present invention, the direction of alignment magnetic field is aligned parallel or perpendicular to the pressing direction of the magnetic powder. There is no specific limitation on the strength of alignment magnetic field which depends on practical desires. In accordance to the preferred embodiment of the present invention, the strength of alignment magnetic field is at least 0.5 Tesla (T), preferably at least 0.7T. In accordance to the preferred embodiment of the present invention, the strength of alignment magnetic field is below 3T, preferably below 2.5T. In accordance to a preferred embodiment of the present invention, the strength of alignment magnetic field is 0.7-2T. The green body obtained from the shaping step S1-3) may have a density of 3.0g/cm³ ∼ 5g/cm³, preferably 3.5g/cm³ ∼ 4.5g/cm³.

### Sintering step S1-4)

In order to prevent oxidation of a green body for sintering, the sintered step S1-4) of the present invention is preferably carried out in vacuum or inert atmosphere. In accordance to the preferred embodiment of the present invention, the sintered step S1-4) is performed in a vacuum sintering furnace. The sintering temperature may be 900-1300°C, preferably 1000-1200°C, more preferably 1000-1080°C; and the sintering time may be 0.5-10 hours, preferably 1-6 hours. The density of the sintered neodymium-iron-boron magnets obtained from the shaping step S1-4) may be 6.0g/cm³-9.0g/cm³, preferably 6.5g/cm³-8.0g/cm³.

### Cutting step S1-5)

In the cutting step S1-5) of the present invention, the cutting process adopts a slicing process and/or a wire cut electrical discharge machining. In the present invention, the sintered neodymium-iron-boron magnets are cut into magnets which may have a thickness, at least in one direction, of 5mm or less. Preferably, the direction of the thickness being 5mm or less is an alignment direction of the sintered neodymium-iron-boron magnets. In the present invention, the sintered neodymium-iron-boron magnets are cut into magnets which may have a thickness, at least in one direction, of 1mm or more.

In the present invention, the magnet manufacturing step S1) is carried out preferably prior to the coating step S2). In the magnet manufacturing step S1), the aging treatment may or may not be performed. In order to save costs, it is preferred to perform the magnet manufacturing step S1) without aging treatment.

### <Coating step S2)>

The coating step S2) of the present invention is used to coat a rare earth element-containing substance on the surface of the sintered neodymium-iron-boron magnets. The rare earth element-containing substance of the present invention is from compounds containing a rare earth element.

In the alloys containing a rare earth element (a2) of the present invention, in addition to the rare earth element, there are also other metal elements. Preferably, the other metal elements are at least one selected from aluminum, gallium, magnesium, tin, silver, copper, and zinc.

The compounds containing rare earth element (a3) of the present invention are inorganic or organic compounds containing a rare earth element. The inorganic compounds containing a rare earth element comprise but not limit to, oxides, hydroxides or inorganic acid salts of a rare earth element. The organic compounds containing a rare earth element comprise but not limit to, organic acid salts, alkoxides or metal complexes containing a rare earth element. In accordance to the preferred embodiments of the present invention, the compounds containing rare earth element of the present invention are halides of a rare earth element, such as fluorides, chlorides, bromides or iodides of a rare earth element.

In the rare earth element-containing substance of the present invention, the rare earth element is selected from praseodymium, neodymium or Yttrium element (heavy rare earth element), such as at least one selected from yttrium, gadolinium, terbium, dysprosium, holmium, erbium, thulium, ytterbium and lutetium. In accordance to the preferred embodiments of the present invention, the rare earth element is at least one of dysprosium or terbium.

The coating process utilized in the coating step S2) of the present invention may be any conventional coating process used in the art, such as wet coating, dry coating or the combination thereof may be used to perform coating.

The wet coating process of the present invention preferably is the following coating process or the combination thereof:
S2-1) dissolving a rare earth element-containing substance in the liquid medium to form a coating liquid in the form of solution, and coating with the coating liquid in the form of solution on the surface of the sintered neodymium-iron-boron magnet; or
S2-2) dispersing the rare earth element-containing substance in the liquid medium to form a coating liquid in the form of suspension or emulsion, and coating with the coating liquid in the form of suspension or emulsion on the surface of the sintered neodymium-iron-boron magnet; or
S2-3) providing coating liquid of the rare earth element-containing substance, immersing the sintered neodymium-iron-boron magnet into the coating liquid, and forming a coating film of the rare earth element-containing substance on the surface of the sintered neodymium-iron-boron magnet by chemical plating, electroplating, or electrophoresis.

In the coating process S2-1) and S2-2), there is no specific limitation on the coating means, any conventional coating process such as dip coating, brush coating, spin coating, spray coating, roller coating, screen printing or ink-jet printing may be used. The liquid medium of the coating liquid may be selected from water, organic solvents, or the combination thereof.

In the coating process S2-3), there is no specific limitation on the chemical plating, electroplating and electrophoresis process, any conventional process in the art may be used.

The dry coating process of the present invention preferably is the following coating process or the combination thereof:
S2-4) making the rare earth element-containing substance into powder, and coating the powder on the surface of the sintered neodymium-iron-boron magnet; or
S2-5) depositing the rare earth element-containing substance on the surface of the sintered neodymium-iron-boron magnet by vapor deposition process.

The coating process S2-4) of the present invention preferably is selected from at least one of flame spraying process (thermal spraying process), fluidized bed process, electrostatic powder spraying process, electrostatic fluidized bed spraying process, vibrational electrostatic powder process. In accordance to the preferred embodiments of the present invention, the above mentioned coating process S2-4) may be used in the coating step S2) to carry out the dry coating.

The coating process S2-5) of the present invention preferably is selected from at least one of chemical vapor deposition (simply referred to as CVD) and physical vapor deposition (simply referred to as PVD).

### <Infiltrating step S3)>

The infiltrating step (i.e. diffusion step) S3) of the present invention preferably comprises steps as follows:
S3-1) placing the sintered neodymium-iron-boron magnet obtained from the coating step S2) into a container which has a passageway capable of carrying out a vacuuming operation;
S3-2) vacuuming by the passageway, until the container having an atmospheric pressure of below 10Pa;
S3-3) closing the passageway in the continued vacuuming operation;
S3-4) heat treating the sintered neodymium-iron-boron magnet closed in the container.

In the present invention, the container and the passageway are both made of heat-resisting materials, so as to prevent melting during the subsequent heat treatment and/or aging treatment. The heat-resisting materials are quartz. The passageway has an inner diameter of 5-12mm. By using this structure, it may be more advantageous to carry out the closing operation on the passageway.

In the step S3-1), at least two sintered neodymium-iron-boron magnets obtained from the coating step S2) are neatly arranged with a surface having the largest area in each magnet as a contact surface, closely contacted with each other under the action of pressure, and then put into the container. The pressure in the present invention is 50-500MPa.

In the step S3-2), the container may have an atmospheric pressure of below 5Pa, preferably below 1Pa, further more preferably below 0.0001Pa. The manner of closing the passageway may be soldering seal.

In the step S3-4), the heat treatment temperature is 600-1200°C, the heat treatment time is 3-6 hours.

### <Aging treatment step S4)>

The aging treatment step S4) of the present invention is used to perform aging treatment on the sintered neodymium-iron-boron magnet. In the present invention, the aging treatment temperature may be 300-900°C, preferably 400-600°C; the time of aging treatment may be 0.5-10 hours, preferably 1-6 hours, more preferably 2-5 hours. In accordance to the preferred embodiment of the present invention, the aging treatment step S4) is carried out after the infiltrating step S3).

### Example 1

### S1) magnet manufacturing step:

S1-1) smelting step: the raw materials in terms of weight percentage were formulated as follows: 23.5% Nd, 5.5% Pr, 2% Dy, 1% B, 1% Co, 0.1% Cu, 0.08% Zr, 0.1% Ga and the balance of Fe; the raw materials were placed in a vacuum melting and rapid-hardening furnace and smelted, to give an alloy sheets with an average thickness of 0.3mm;
S1-2) powdering step: the alloy sheets obtained from the smelting step S1-1) were made to form coarse magnetic powder with a particle size of 300µm by hydrogen absorption and hydrogen desorption in the hydrogen decrepitation furnace, and then the coarse magnetic powder were grinded in jet milling with nitrogen as media into fine magnetic powder with an average particle size D50 of 4.2µm;
S1-3) shaping step: in a moulding press under protection of nitrogen, an alignment magnetic field of 1.8T was applied to shape the fine magnetic powder obtained from the powdering step S1-2) to form the green body for sintering with the density of 4.3g/cm³;
S1-4) sintering step: the green body obtained from the shaping step S1-3) were placed in a vacuum sintering furnace to perform high temperature sintering, in order to form a sintered neodymium-iron-boron magnet, the vacuum degree in the vacuum sintering furnace is about 0.1Pa, the sintering temperature is 1050°C, the sintering time is 5 hours, and the density of the obtained sintered neodymium-iron-boron magnet with size of 50mm×40mm×30mm achieves 7.6g/cm³
S1-5) cutting step: the sintered neodymium-iron-boron magnets obtained from the sintering step S1-4) were cut into magnets with size of 38mm×23.5mm×4mm.

### S2) coating step:

The terbium fluoride powder was coated on the surface of the sintered neodymium-iron-boron magnets obtained from the magnet manufacturing step S1) which have been cut.

### S3) infiltrating step :

S3-1) the sintered neodymium-iron-boron magnets obtained from the coating step S2) were placed in a quartz container, and the quartz container was sealed through a quartz tube with a diameter of 7mm;
S3-2) the quartz container was vacuumed through the quartz tube to an atmospheric pressure of below 1Pa;
S3-3) the quartz tube was solder sealed under continued vacuuming;
S3-4) the sintered neodymium-iron-boron magnets were heat treated, the heat treatment temperature is 900°C, and the heat treatment time is 5 hours;

### S4) aging treatment step :

Under vacuum conditions, the aging treatment was performed on the sintered neodymium-iron-boron magnets obtained from the infiltrating step S3), the aging treatment temperature is 500°C, and the aging treatment time is 3 hours.

### Example 2

The other conditions were the same as Example 1, except that the step S3-1) of Example 1 was changed to the following step: the sintered neodymium-iron-boron magnets obtained from the coating step S2) were neatly arranged in the direction of 4 millimeter thickness, the two ends of the sintered neodymium-iron-boron magnets which had been neatly arranged were applied a pressure of 500MPa by a holder, and then the sintered neodymium-iron-boron magnets which had been applied a pressure were placed in a quartz container, the quartz container was sealed through a quartz tube with a diameter of 7mm.

### Comparative Example 1

The aging treatment was performed on the sintered neodymium-iron-boron magnets obtained from the sintering step S1-4) in the Example 1, the aging treatment temperature is 500°C, and the aging treatment time is 3 hours.

### Comparative Example 2

The sintered neodymium-iron-boron magnets obtained from the coating step S2) in the Example 1 were placed in an graphite case under normal pressure, and heat treated, the heating treatment temperature is 900°C, and the heating treatment time is 5 hours; then performing the aging treatment, the aging treatment temperature is 500°C, and the aging treatment time is 3 hours.

### Experimental Example 1

The sintered neodymium-iron-boron magnets obtained from Examples 1-2, and Comparative Examples 1-2 were cut into magnets of 9×9×4mm, and then "remanence"(Bᵣ) and "intrinsic coercive force"(H_{cj}) thereof were measured. The results thereof are shown in Table 1.

**Table 1**

| | Example 1 | Example 2 | Comparative Example 1 | Comparative Example 2 |
|---|---|---|---|---|
| Br (kGs) | 13.71 | 13.70 | 13.82 | 13.75 |
| Hcj (kOe) | 26.52 | 27.48 | 18.25 | 25.85 |

## Claims

1. A method for preparing a permanent magnet material, **characterized in that**, comprising steps as follows:
S2) coating step: coating a rare earth element-containing substance on the surface of a sintered neodymium-iron-boron magnet, wherein, the sintered neodymium-iron-boron magnet has a thickness of 1-5mm at least in one direction; and
S3) infiltrating step, comprising steps as follows:
S3-1) placing the sintered neodymium-iron-boron magnet obtained from the coating step S2) into a container which has a passageway capable of carrying out a vacuuming operation;
S3-2) vacuuming by the passageway, until the container having an atmospheric pressure of below 10Pa;
S3-3) closing the passageway in the continued vacuuming operation;
S3-4) heat treating the sintered neodymium-iron-boron magnet closed in the container; and
S4) aging treatment step: performing an aging treatment on the sintered neodymium-iron-boron magnet obtained from the coating step S3);
wherein in the coating step S2), the rare earth element-containing substance is selected from compounds containing a rare earth element;
wherein in the infiltrating step S3-1), the container and the passageway are both made of quartz materials, and an inner diameter of the passageway is 5-12mm; and
wherein in the step S3-1), at least two magnets obtained from the coating step S2) are neatly arranged with a surface having the largest area in each magnet as a contact surface, closely contacted with each other under the action of pressure of 50-1000MPa, and then put into the container;
wherein in the step S3-4), the heat treatment temperature is 600-1200°C; the heat treatment time is 3-6 hours.

2. The preparation method according to claim 1, **characterized in that**, in the coating step S2), the rare earth element is at least one selected from praseodymium, neodymium, yttrium, gadolinium, terbium, dysprosium, holmium, erbium, thulium, ytterbium and lutetium.

3. The preparation method according to claim 1, **characterized in that**,
in the step S3-2), carrying out the vacuuming operation by the passageway, until the container having an atmospheric pressure of below 5Pa.

4. The preparation method according to claim 1, **characterized in that**, further comprising:
S1) magnet manufacturing step: manufacturing a sintered neodymium-iron-boron magnet.

5. The preparation method according to claim 4, **characterized in that**, the sintered neodymium-iron-boron magnet manufacturing step S1) comprising steps as follows:
S1-1) smelting step: smelting the neodymium-iron-boron raw material so that the smelted neodymium-iron-boron raw material forms a master alloy, wherein the master alloy has a thickness of 0.01-5 mm;
S1-2) powdering step: crushing the master alloy from the smelting step S1-1) into magnetic powder, wherein the magnetic powder has an average particle size D50 of 20 µm or less;
S1-3) shaping step: pressing the magnetic powder from the powdering step S1-2) into a green body for sintering under the action of an alignment magnetic field, wherein the green body has a density of 3.0 g/cm³-5 g/cm³; and
S1-4) sintering step: sintering the green body from the shaping step S1-3) into the sintered neodymium-iron-boron magnet, wherein the sintering temperature is 900-1300°C, the sintering time is 0.5-10 hours, the density of the magnet is 6.0g/cm³-9.0g/cm³.

## Patentansprüche

1. Verfahren zur Herstellen eines Permanentmagnetmaterials, **dadurch gekennzeichnet, dass** es die folgenden Schritte umfasst:
S2) Beschichtungsschritt: Beschichten einer seltenerdelementhaltigen Substanz auf der Oberfläche eines gesinterten Neodym-Eisen-Bor-Magneten, wobei der gesinterte Neodym-Eisen-Bor-Magnet eine Dicke von mindestens 1-5 mm in mindestens einer Richtung hat;
und
S3) Infiltrationsschritt, umfassend die folgenden Schritte:
S3-1) Platzieren des gesinterten Neodym-Eisen-Bor-Magneten, der aus dem Beschichtungsschritt S2) erhalten wird, in einen Behälter mit einen Durchgang, welcher in der Lage ist, einen Vakuumvorgang durchzuführen;
S3-2) Absaugen durch den Durchgang, bis der Behälter einen Atmosphärendruck von unter 10 Pa hat;
S3-3) Schließen des Durchgangs im fortgesetzten Absaugvorgang;
S3-4) Wärmebehandeln des gesinterten Neodym-Eisen-Bor-Magneten, der in dem Behälter geschlossen ist; und
S4) Alterungsbehandlungsschritt: Durchführen einer Alterungsbehandlung an dem aus dem Beschichtungsschritt S3) erhaltenen gesinterten Neodym-Eisen-Bor-Magneten;
wobei in dem Beschichtungsschritt S2) die seltenerdelementhaltige Substanz aus Verbindungen, die ein Seltenerdelement enthalten, ausgewählt wird;
und wobei in dem Infiltrationsschritt S3-1) der Behälter und der Durchgang beides aus Quarzmaterialien hergestellt sind, und wobei ein innerer Durchmesser des Durchgangs 5-12 mm beträgt; und
wobei in dem Schritt S3-1) mindestens zwei Magnete, die aus dem Beschichtungsschritt S2 erhalten werden, ordentlich angeordnet, und wobei sie unter Verwendung einer Oberfläche, die die größte Fläche in jedem Magneten hat, als Kontaktoberfläche, unter der Einwirkung von Druck von 50-1000MPa, eng miteinander in Kontakt gebracht und dann in den Behälter eingelegt werden.
Und wobei in dem Schritt S3-4) die Wärmebehandlungstemperatur 600-1200□ und die Wärmebehandlungszeit 3-6 Stunden beträgt.

2. Herstellungsverfahren nach Anspruch 1, **dadurch gekennzeichnet, dass** in dem Beschichtungsschritt S2) das Seltenerdelement mindestens eines ist, welches aus Praseodym, Neodym, Yttrium, Gadolinium, Terbium, Dysprosium, Holmium, Erbium, Thulium, Ytterbium und Lutetium ausgewählt wird.

3. Herstellungsverfahren nach Anspruch 1, **dadurch gekennzeichnet, dass** in dem Schritt S3-2) der Absaugvorgang durch den Durchgang durchgeführt wird, bis der Behälter einen Atmosphärendruck von unter 5 Pa hat.

4. Herstellungsverfahren nach Anspruch 1, **dadurch gekennzeichnet, dass** es weiterhin umfasst:
S1) Magnetherstellungsschritt: Herstellung eines gesinterten Neodym-Eisen-Bor-Magneten.

5. Herstellungsverfahren nach Anspruch 4, **dadurch gekennzeichnet, dass** der Herstellungsschritt S1) des gesinterten Neodym-Eisen-Bor-Magneten die folgenden Schritte umfasst:
S1-1) Schmelzschritt: Schmelzen des Neodym-Eisen-Bor-Rohmaterials, so dass das geschmolzene Neodym-Eisen-Bor-Rohmaterial eine Vorlegierung bildet, wobei die Vorlegierung eine Dicke von 0,01-5 mm hat;
S1-2) Pulverisierungsschritt: Zerkleinern der Vorlegierung von dem Schmelzschritt S1-1) in ein magnetisches Pulver, wobei das magnetische Pulver eine durchschnittliche Teilchengröße D50 von 20 µm oder weniger hat;
S1-3) Formungsschritt: Pressen des magnetischen Pulvers von dem Pulverisierungsschritt S1-2) zu einem Grünkörper zum Sintern unter der Wirkung eines Ausrichtungsmagnetfeldes, wobei der Grünkörper eine Dichte von 3,0 g/cm³ - 5 g/cm³ hat; und
S1-4) Sinterschritt: Sintern des Grünkörpers von dem Formungsschritt S1-3) in den gesinterten Neodym-Eisen-Bor-Magneten, wobei die Sintertemperatur 900-1300□, die Sinterzeit 0,5-10 Stunden und die Dichte des Magneten 6,0 g/cm³-9,0 g/cm³ beträgt.

## Revendications

1. Procédé de préparation d'un matériau d'aimant permanent, **caractérisé en ce qu'**il comprend les étapes suivantes :
S2) étape d'enduction : enduction d'une substance contenant au moins un élément terre rare sur la surface d'un aimant de néodymium-fer-bore fritté, dans lequel l'aimant de néodymium-fer-bore a une épaisseur de 1 à 5 mm au moins dans une direction ; et
S3) étape d'infiltration, comprenant les étapes suivantes :
S3-1) placement de l'aimant de néodymium-fer-bore fritté obtenu à partir de l'étape d'enduction S2) dans un récipient qui possède un passage capable de réaliser une opération d'aspiration ;
S3-2) aspiration par le passage, jusqu'à ce que le récipient ait une pression atmosphérique inférieure à 10 Pa ;
S3-3) fermeture du passage l'opération d'aspiration poursuivie ;
S3-4) traitement thermique de l'aimant de néodymium-fer-bore enfermé dans le récipient ; et
S4) étape de traitement de vieillissement : exécution d'un traitement de vieillissement sur l'aimant de néodymium-fer-bore fritté obtenu à partir de l'étape d'enduction S3) ;
dans lequel dans l'étape d'enduction S2), la substance contenant au moins un élément terre rare est sélectionnée parmi des composés contenant un élément terre rare ;
dans lequel dans l'étape d'infiltration S3-1), le récipient et le passage sont tous deux constitués de matériaux de quartz, et un diamètre interne du passage est de 5 à 12 mm ; et
dans lequel dans l'étape S3-1), au moins deux aimants obtenus à partir de l'étape d'enduction S2) sont agencés soigneusement avec une surface ayant l'aire la plus grande dans chaque aimant en tant que surface de contact, en contact étroit l'un avec l'autre sous l'action d'une pression de 50 à 1000 MPa, et mis ensuite dans le récipient ;
dans lequel dans l'étape S3-4), la température de traitement thermique est de 600 à 1200 °C ; le temps de traitement thermique est de 3 à 6 heures.

2. Procédé de préparation selon la revendication 1, **caractérisé en ce que**, dans l'étape d'enduction S2), l'élément terre rare est au moins l'un sélectionné parmi praséodymium, néodymium, yttrium, gadolinium, terbium, dysprosium, holmium, erbium, thulium, ytterbium et lutétium.

3. Procédé de préparation selon la revendication 1, **caractérisé en ce que**,
dans l'étape S3-2), l'opération d'aspiration par le passage est réalisée jusqu'à ce que le récipient ait une pression atmosphérique inférieur à 5 Pa.

4. Procédé de préparation selon la revendication 1, **caractérisé en ce qu'**il comprend en outre :
S1) étape de fabrication d'aimant : fabrication d'un aimant de néodymium-fer-bore.

5. Procédé de préparation selon la revendication 4, **caractérisé en ce que** l'étape de fabrication S1) de l'aimant néodymium-fer-bore comprend les étapes suivantes :
S1-1) étape de fusion : fusion de la matière première de néodymium-fer-bore de sorte que la matière première de néodymium-fer-bore fondue forme un alliage maître, l'alliage maître ayant une épaisseur de 0,01 à 5 mm ;
S1-2) étape de pulvérisation : écrasement de l'alliage maître issu de l'étape de fusion S1-1) en poudre magnétique, la poudre magnétique ayant une taille de particule moyenne D50 de 20 µm ou moins ;
S1-3) étape de façonnage : compression de la poudre magnétique issue de l'étape de pulvérisation S1-2) en un corps vert pour frittage sous l'action d'un champ magnétique d'alignement, dans lequel le corps vert a une densité de 3,0 g/cm³ à 5 g/cm³ ; et
S1-4) étape de frittage : frittage du corps vert issu de l'étape de façonnage S1-3) en l'aimant de néodymium-fer-bore, dans lequel la température de frittage est de 900 à 1300 °C, le temps de frittage est de 0,5 à 10 heures, la densité de l'aimant est de 6,0 g/cm³ à 9,0 g/cm³.
